# EUROPÄISCHE PATENTANMELDUNG

(11) **EP 2 072 344 A2**
(43) Veröffentlichungstag der Anmeldung: **24.06.2009**
(21) Anmeldenummer: 08170951.1
(22) Anmeldetag: 08.12.2008
(51) Int. Cl.: B60R 21/13

(54) **Überrollschutzeinrichtung mit Aufbrechvorrichtung**

(30) Priorität: 13.12.2007 DE 102007061065
(71) Anmelder: ISE Automotive GmbH, 51702 Bergneustadt (DE)
(72) Erfinder: Vosshagen, Thomas, 51766 Engelskirchen (DE); Naß, Michael, 51702 Bergneustadt (DE); Liesaus, Frank, 51702 Bergneustadt (DE)
(74) Vertreter: Weiss, Christian

(57) **Zusammenfassung**

Für eine Überrollschutzeinrichtung für Kraftfahrzeuge mit einem abnehmbaren oder versenkbaren Dach wird eine Vorrichtung vorgeschlagen, mit der eine in das Dach integrierte Scheibe (1), die im Ausfahrweg des Überrollkörpers (2) angeordnet ist, zerstört oder geschwächt werden kann, bevor der Überrollkörper (2) die Konstruktionsebene der Scheibe (1) erreicht.

Die Vorrichtung umfasst einen beweglich gelagerten Dorn (3), der vom Überrollkörper (2) beim Ausfahren gegen die Scheibe (1) vortreibbar ist.

Dabei ist der Dorn (3) vorzugsweise auf einem schwenkbaren Hebel (4) angeordnet, der um eine Schwenkachse (5), die im Gehäuse (6) für den Überrollkörper (2) gelagert ist, schwenkbar aus einer Ruheposition in eine Wirkposition an der Scheibe (1) schwenkbar ist.

## Beschreibung

Die Erfindung betrifft eine Überrollschutzeinrichtung für Kraftfahrzeuge mit einem abnehmbaren oder versenkbaren Dach, umfassend wenigstens einen Überrollkörper, der aus einer fixierten Ruhestellung durch eine in das Dach integrierte Scheibe in eine oberhalb der Scheibe liegende, feststellbare Schutzstellung ausfahrbar ist, eine sensorgesteuerte Antriebseinrichtung für den Überrollkörper und eine Vorrichtung, mit der die Scheibe aufbrechbar oder zumindest wirksam schwächbar ist.

Mit derartigen Überrollschutzeinrichtungen werden Personenkraftwagen ausgerüstet, bei denen das Dach abnehmbar oder versenkbar ist und für die im Falle eines Überschlags eine stabile Abstützung der umgedrehten Karosserie auf dem Untergrund vorgesehen werden muss, um einen Sicherheitsraum für die Fahrgäste zu schaffen. Sie sind auch dann erforderlich, wenn das Fahrzeug eine zwar permanente, aber nicht hinreichend stabile Dachkonstruktion aufweist. Derartige Fahrzeuge werden im Rahmen dieser Anmeldung gleichgesetzt mit solchen, die ein abnehmbares oder versenkbares Dach aufweisen.

Die in das Dach integrierte Scheibe kann als Heckscheibe für die Orientierung über den Rückspiegel nach hinten oder als Dachscheibe für den Lichteinlass in das Fahrzeug ausgebildet sein. Sie wird aber immer so angeordnet, dass sie im Ausfahrweg des Überrollkörpers liegt, um das Durchstoßen der Dachkonstruktion zu erleichtern bzw. überhaupt zu ermöglichen. Sie hat - für den Fall eines Überschlags - neben ihrer Hauptfunktion quasi die Funktion einer "Sollbruchstelle".

Es hat sich allerdings herausgestellt, dass es vielfach nicht genügt, wenn die Scheibe vom Überrollkörper selbst zerstört oder verlagert wird. Scheiben aus Plexiglas sind im Vergleich zu echtem Glas relativ elastisch und nicht so leicht aufzubrechen. Auch die Einfassung der Scheiben, die aus elastischem Material bestehen, erschweren ein Aufbrechen. Schließlich sind faltbare Dächer auch kein starres Widerlager, das im Zusammenspiel mit dem ausfahrenden Überrollkörper das Aufbrechen erleichtern würde.

Man hat daher schon Überlegungen angestellt, wie die im Ausfahrweg des Überrollkörpers angeordnete Scheibe wirksamer aufgebrochen oder zumindest geschwächt werden kann, um die Behinderung des Überrollkörpers beim Ausfahren zu vermindern. Ohne solche Maßnahmen müsste man sicherheitshalber die Antriebseinrichtungen verstärken, was aus Platzgründen oft nicht möglich ist und das Fahrzeuggewicht unnötig erhöhen würde.

Aus der EP 1 510 412 A1 ist ein Überrollkörper bekannt geworden, dessen oberer Querholm mit mindestens einem glasbrechenden, die Scheibe zuerst erreichenden Dorn aus Hartmetall ausgestattet ist. Das erleichtert zwar das Aufbrechen von Glas, bringt bei elastischen Materialien aber kaum einen Vorteil, weil der Auftreffwinkel des Dorns direkt von der Ausfahrrichtung des Überrollkörpers abhängig ist, was bei spitzen Winkeln zwischen Dorn und Scheibe ein Durchschlagen erschwert.

Das gleiche gilt für den glasbrechend ausgebildeten Verschleißschutz gemäß DE 10 2006 006 658 B3, der am oberen Ende des Überrollkörpers angebracht ist.

Diese Nachteile werden bei den aus der DE 20 2006 003 649 U1 und der EP 1 510 412 A1 bekannten separaten Öffnungs-Einrichtungen zwar überwunden, die aber von vielen Kraftfahrzeug-Herstellern als zu aufwändig angesehen werden.

Es besteht somit die Aufgabe, einen Weg aufzuzeigen, wie eine in ein Fahrzeugdach integrierte Scheibe, die beim Ausfahren des Überrollkörpers durchstoßen werden muss, möglichst unaufwändig zerstört oder zumindest wirksam geschwächt werden kann, ohne dass Reaktionskräfte direkt als Verzögerung des ausfahrenden Überrollkörpers wirken.

Erfindungsgemäß wird diese Aufgabe mit einer Vorrichtung gelöst, die einen beweglich gelagerten Dorn umfasst, der vom Überrollkörper beim Ausfahren derart gegen die Scheibe vortreibbar ist, dass diese aufgebrochen oder geschwächt wird, bevor der Überrollkörper die Konstruktionsebene der Scheibe erreicht.

Dem liegt die Erwägung zugrunde, dass die Scheibe zerstört oder geschwächt werden muss, ohne dass der ausfahrende Überrollkörper noch einen nennenswerten Widerstand überwinden muss und ohne dass irgendwelche Verstärkungen der Antriebseinrichtung vorgesehen werden müssen.

Weiterhin war anzustreben, dass der ausfahrende Überrollkörper zur Lösung der Aufgabe bei der Verlagerung des beweglich gelagerten Dorns keine größeren Massenträgheitskräfte überwinden muss. Deswegen sind alle Ausführungsformen möglichst massearm ausgelegt, um den ausfahrenden Überrollkörper, auch bevor er die Konstruktionsebene der Scheibe erreicht, nur möglichst wenig abzubremsen.

Der Dorn selbst besteht in bekannter Weise aus hartem Material und ist so angeordnet, dass er in einem günstigen Winkel auf die Scheibe trifft, um eine möglichst große brechende oder schwächende Wirkung zu erzielen, bevor der Überrollkörper selbst die Konstruktionsebene der Scheibe erreicht.

Bei einer ersten Ausführungsform des Erfindungsgedankens ist der Dorn auf einem Hebel angeordnet, der vom ausfahrenden Überrollkörper aus einer Ruheposition in eine Wirkposition an der Scheibe schwenkbar ist. Dabei kann die Schwenkachse des Hebels in einem fahrzeugfesten Gehäuse oder in einem teleskopartig ausfahrbaren Bauteil gelagert sein, das im fahrzeugfesten Gehäuse in Bewegungsrichtung des Überrollkörpers verschieblich angeordnet ist. Eine weitere Abwandlung ergibt sich, wenn die Schwenkachse so im fahrzeugfesten Gehäuse gelagert ist, dass der Hebel in Ruheposition etwa horizontal unter der Oberkante des Gehäuses liegt. In diesem Fall können im Überrollkörper parallel zur Schwenkachse Bohrungen für die Aufnahme eines Mitnehmers vorgesehen werden, die von der Lagerung der Schwenkachse gestuft beabstandet sind. Das ermöglicht es, die Voreilgeschwindigkeit des Dorns gegenüber dem Überrollkörper und die Wirkposition des Dorns auf unterschiedliche Abstände zwischen Schwenkachse und Scheibe einzustellen.

Die Schwenkachse des Hebels kann auch unabhängig vom Überrollschutzsystem in einer fahrzeugfesten Aufnahme gelagert sein und der Hebel direkt oder mittels eines am Überrollkörper angebrachten Mitnehmers geschwenkt werden.

Bei einer anderen Ausführungsform ist der Dorn in einer Aufnahme verschiebbar gelagert, die fest mit der Scheibe verbunden ist, wobei das hintere, aus der Aufnahme vorstehende Ende des Dorns vom ausfahrenden Überrollkörper in Wirkposition vortreibbar ist.

Weitere Einzelheiten und Vorteile werden anhand der in den Figuren 1 bis 6 dargestellten Ausführungsbeispiele erläutert.

### Es zeigen, jeweils in Ruhestellung A und in Wirkstellung B:

- Fig. 1: eine Ausführungsform, bei der der Hebel im Gehäuse der Überrollschutzeinrichtung schwenkbar gelagert ist,
- Fig. 2: eine Ausführungsform, bei der der Hebel in einem teleskopartig ausfahrbaren Bauteil schwenkbar gelagert ist,
- Fig. 3: eine Ausführungsform mit unterschiedlich einstellbaren Hebelverhältnissen,
- Fig. 4: eine Ausführungsform mit einer fahrzeugfesten Hebellagerung,
- Fig. 5: eine Ausführungsform mit scheibenfester Aufnahme für den Dorn,
- Fig. 6: in vergrößerter Darstellung ein Detail der Ausführungsform gemäß Fig. 5.

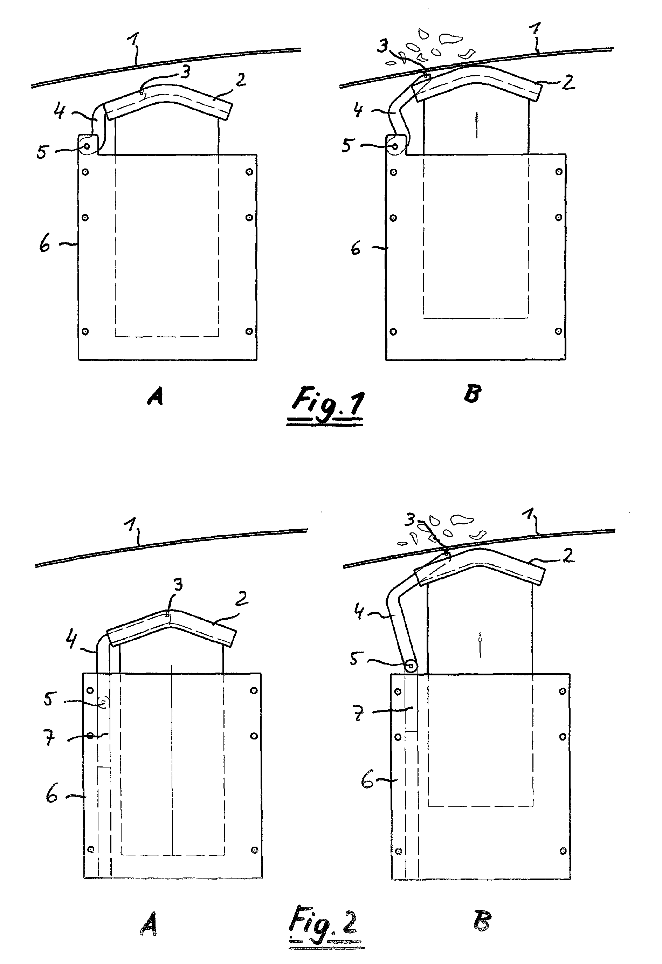

In Fig. 1 ist die Scheibe mit 1, der Überrollkörper mit 2, der Dorn mit 3, der Hebel mit 4 und die Schwenkachse des Dorns mit 5 bezeichnet. Bei diesem Ausführungsbeispiel ist die Schwenkachse 5 im Gehäuse 6 der Überrollschutzeinrichtung gelagert. Beim Ausfahren des Überrollkörpers 2 wird der Hebel 4 vom Überrollkörper 2 in die Wirkstellung gemäß Fig.1 B geschwenkt, in der der Dorn 3 die Wirkstellung an der Scheibe 1 erreicht, bevor der Überrollkörper selbst die Konstruktionsebene der Scheibe 1 durchstößt. Die Darstellung ist stark vereinfacht und nicht streng maßstäblich. Sie soll vor allem den Wirkmechanismus der erfindungsgemäßen Vorrichtung verdeutlichen. Die konstruktive Ausbildung des Hebels 4 lässt ebenso wie die Lagerung seiner Schwenkachse 5 im Gehäuse 6 viele gestalterische Spielräume, die genutzt werden können, ohne vom Erfindungsgedanken abzuweichen.

In Fig. 1 A ist die Ruhestellung des Hebels 4 so dargestellt, dass der Dorn 3 unterhalb der oberen Begrenzung des Überrollkörpers 2 liegt, um eine Verletzungsgefahr auszuschließen. Bei allen denkbaren Variationen dieser Ausführungsform ist darauf zu achten, dass der Dorn die Wirkstellung an der Scheibe erreicht, bevor der ausfahrende Überrollkörper 2 die Scheibe 1 als Widerstand "merkt".

Die Ausführungsform gemäß Fig. 2 unterscheidet sich von derjenigen nach Fig. 1 dadurch, dass die Schwenkachse 5 des Hebels 4 nicht ortsfest im Gehäuse 6, sondern an einem teleskopartig ausfahrbaren Bauteil 7 gelagert ist. Wie aus Fig. 2 B ersichtlich, ist ein Schwenken des Hebels 4 erst möglich, wenn das Bauteil 7 so weit aus dem Gehäuse 6 herausgefahren ist, dass die Schwenkachse 5 oberhalb der Gehäuseführung liegt, die bis dahin auch als Führung für den Hebel 4 dient. Auch bei dieser Ausführungsform lassen sich die bei Fig. 1 erläuterten Abwandlungen realisieren.

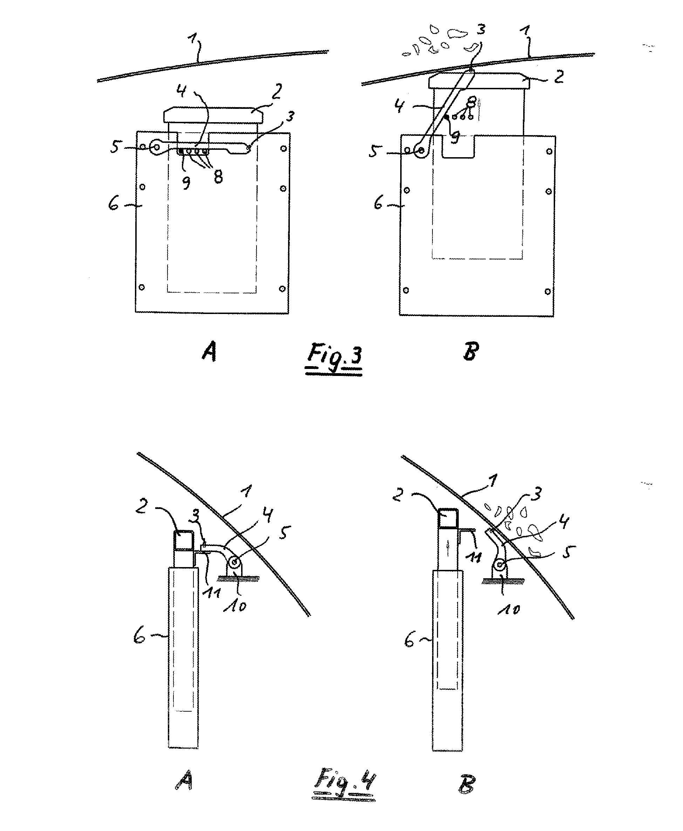

Bei der Ausführungsform gemäß Fig. 3 ist der Hebel 4 wieder um eine Schwenkachse 5 drehbar, die im Gehäuse 6 der Überrollschutzeinrichtung angeordnet ist. Der Hebel 4 mit Dorn 3 ist zur Vermeidung eines Verletzungsrisikos unterhalb der oberen Begrenzung des Gehäuses 6 angeordnet und kann mit einem Mitnehmer 9, der fest mit dem Überrollkörper 2 verbunden ist, geschwenkt werden. Für diesen Mitnehmer 9 sind im Überrollkörper 2 mehrere Bohrungen 8 vorgesehen, die gestuft beabstandet von der Schwenkachse angeordnet sind. Auf diese Weise kann der Angriffspunkt des Mitnehmers 9 am Hebel 4 variiert werden, wodurch sich eine Gestaltungsfreiheit für die Schwenkbewegungen hinsichtlich Geschwindigkeit und Auftreffwinkel des Dorns 3 auf die Scheibe 1 ergibt. Auch hier ist die Darstellung wieder stark vereinfacht und nicht streng maßstäblich. Es soll nur deutlich werden, dass die Hebelverhältnisse unterschiedlich einstellbar und dadurch an vorhandene Einbauverhältnisse anpassbar sind.

Bei der Ausführungsform der Fig. 4 ist die Schwenkachse 5 des Hebels 4 unabhängig vom Gehäuse 6 der Überrollschutzeinrichtung in einer fahrzeugfesten Aufnahme 10 gelagert. In diesem Fall wird der Hebel 4 von einem Mitnehmer 11 am Überrollkörper 2 geschwenkt und dadurch der Dorn 3 in die Wirkstellung an der Scheibe 1 verlagert. Selbstverständlich kann die Aufnahme 10 unter Berücksichtigung der räumlichen Gegebenheiten im Fahrzeug so angeordnet werden, dass eine optimale Wirkung des gegenüber dem Überrollkörper 2 voreilenden Dorns 3 erreicht wird.

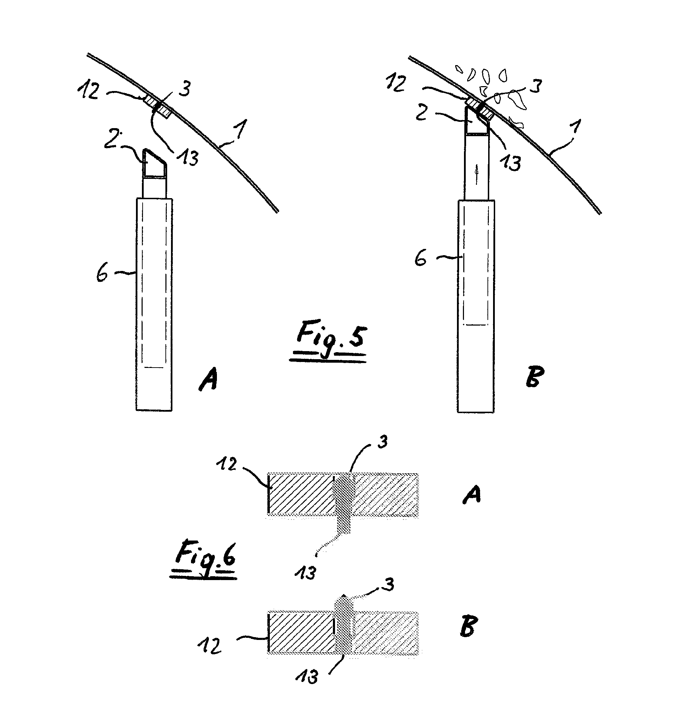

Fig. 5 zeigt eine Alternative für eine fahrzeugfest angeordnete Aufnahme 12 für den Dorn 3. In diesem Fall ist die Aufnahme 12 ein verhältnismäßig kleines Bauteil, das an der Scheibe 1 so angebracht ist, dass das hintere Ende des Dorns beim Ausfahren des Überrollkörpers 2 aus dem Gehäuse 6 beaufschlagt und der Dorn gegen die Scheibe 1 vorgetrieben werden kann. Auch hier wird der Dorn 3 in Wirkstellung gebracht, bevor der Überrollkörper 2 den Widerstand der Scheibe 1 "merkt". Es muss nur die verhältnismäßig kleine Masse des Dorns beschleunigt werden, um den gewünschten Aufbrech- bzw. Schwächungseffekt zu erzielen.

In Fig. 6 ist noch einmal in vergrößerter Darstellung die auf der Scheibe 1 zu befestigende Aufnahme 12 mit Dorn 3 gezeigt, wobei das hintere Ende 13 des Dorns 3 in Fig. 6 A in der Ruhestellung und in Fig. 6 B in Wirkstellung gezeigt ist.

Allen dargestellten Ausführungsformen ist gemeinsam, dass der beweglich gelagerte Dorn gegen die Scheibe vortreibbar ist, und dass dieser aufgebrochen oder geschwächt wird, bevor der Überrollkörper die Konstruktionsebene der Scheibe erreicht. Dadurch wird die sonst mögliche Bremskraft der Scheibe auf den ausfahrenden Überrollkörper beseitigt oder doch erheblich geschwächt.

Weitere Ausgestaltungen des Erfindungsgedankens sind in den die Stammanmeldung ergänzenden Unteransprüchen 9 bis 15 beschrieben.

Überrollschutzeinrichtungen werden häufig "versteckt" angeordnet, weil sie als optisch störend empfunden werden oder weil der Fahrzeugbenutzer nicht ständig auf einen möglichen Fahrzeugüberschlag hingewiesen werden soll.

Für derartige Fälle wird vorgeschlagen, dass der Dorn in einem Bauteil (Teil einer Abdeckung oder der Innenauskleidung des Fahrzeugs) angeordnet ist, das lösbar mit seiner Umgebung verbunden und vom ausfahrenden Überrollkörper in Richtung Scheibe mitnehmbar ist.

Ein derartiges Bauteil ist zweckmäßigerweise über eine Sollbruchstelle, Presspassung, Verklipsung oder dergleichen mit seiner Umgebung lösbar verbunden.

Ferner kann man vorsehen, dass längs des Ausfahrweges des Überrollkörpers eine Führung für das mitgenommene Bauteil vorgesehen ist.

Weiterhin ist es vorteilhaft, wenn der Dorn in einem Schlitten oder einer Führung relativ zum Bauteil beweglich gelagert ist, und wenn der Dorn in seiner Ausgangsstellung nicht über den oberen Rand des Bauteils vorsteht.

Zur Aktivierung der "Glasbrecherfunktion" kann man vorsehen, dass die Spitze des Dorns vom ausfahrenden Überrollkörper über den oberen Rand des Bauteils austreibbar ist.

Eine Alternative besteht darin, dass die Spitze des Dorns durch Trägheitskräfte über den oberen Rand des Bauteils austreibbar ist, wenn die Bewegung des Bauteils beim Anstoßen an die Scheibe, durch das Lösen aus seiner Umgebung oder durch einen Widerstand in seiner Führung verzögert wird.

## Patentansprüche

1. Überrollschutzeinrichtung für Kraftfahrzeuge mit einem abnehmbaren oder versenkbaren Dach umfassend
- wenigstens einen Überrollkörper (2), der aus einer fixierten Ruhestellung durch eine in das Dach integrierte Scheibe (1) in eine oberhalb der Scheibe (1) liegende, feststellbare Schutzstellung ausfahrbar ist,
- eine sensorgesteuerte Antriebseinrichtung für den Überrollkörper (2) und
- eine Vorrichtung (3, 4, 5), mit der die Scheibe (1) aufbrechbar oder zumindest wirksam schwächbar ist, **dadurch gekennzeichnet, dass** die Vorrichtung einen beweglich gelagerten Dorn (3) umfasst, der vom Überrollkörper (2) beim Ausfahren derart gegen die Scheibe (1) vortreibbar ist, dass diese aufgebrochen oder geschwächt wird, bevor der Überrollkörper (2) die Konstruktionsebene der Scheibe (1) erreicht.

2. Überrollschutzeinrichtung nach Anspruch 1, **dadurch gekennzeichnet, dass** der Dorn (3) auf einem Hebel (4) angeordnet ist, der vom ausfahrenden Überrollkörper (2) aus einer Ruheposition in eine Wirkposition an der Scheibe (1) schwenkbar ist.

3. Überrollschutzeinrichtung nach Anspruch 2, **dadurch gekennzeichnet, dass** die Schwenkachse (5) des Hebels (4) in einem fahrzeugfesten Gehäuse (6) für den Überrollkörper (2) gelagert ist.

4. Überrollschutzeinrichtung nach Anspruch 2, **dadurch gekennzeichnet, dass** die Schwenkachse (5) des Hebels (4) in einem teleskopartig ausfahrbaren Bauteil (7) gelagert ist, das im fahrzeugfesten Gehäuse (6) in Bewegungsrichtung des Überrollkörpers (2) verschieblich angeordnet ist.

5. Überrollschutzeinrichtung nach Anspruch 2, **dadurch gekennzeichnet, dass** die Schwenkachse (5) im fahrzeugfesten Gehäuse (6) gelagert ist und dass der Hebel (4) in Ruheposition etwa horizontal unterhalb der Oberkante des Gehäuses (6) liegt.

6. Überrollschutzeinrichtung nach Anspruch 5, **dadurch gekennzeichnet, dass** im Überrollkörper (2) parallel zur Schwenkachse (5) Bohrungen (8) für die Aufnahme eines Mitnehmers (9) vorgesehen sind, die von der Lagerung der Schwenkachse (5) gestuft beabstandet sind, so dass die Voreilgeschwindigkeit des Dorns (3) gegenüber dem Überrollkörper (2) und die Wirkposition des Dornes (3) auf unterschiedliche Abstände zwischen Schwenkachse (5) und Scheibe (1) einstellbar ist.

7. Überrollschutzeinrichtung nach Anspruch 2, **dadurch gekennzeichnet, dass** die Schwenkachse (5) des Hebels (4) unabhängig vom Überrollschutzsystem in einer fahrzeugfesten Aufnahme (10) gelagert ist und dass der Hebel (4) direkt oder mittels eines am Überrollkörper (2) angebrachten Mitnehmers (11) schwenkbar ist.

8. Überrollschutzeinrichtung nach Anspruch 1, **dadurch gekennzeichnet, dass** der Dorn (3) in einer Aufnahme (12) verschiebbar gelagert ist, die fest mit der Scheibe (1) verbunden ist und dass das hintere Ende (13) des Dorns (3) aus der Aufnahme (12) vorsteht und vom ausfahrenden Überrollkörper (2) in Wirkposition vortreibbar ist.

9. Überrollschutzeinrichtung nach Anspruch 1, **dadurch gekennzeichnet, dass** der Dorn in einem Bauteil (Teil einer Abdeckung oder der Innenauskleidung des Fahrzeugs) angeordnet ist, das lösbar mit seiner Umgebung verbunden und vom ausfahrenden Überrollkörper in Richtung Scheibe mitnehmbar ist.

10. Überrollschutzeinrichtung nach Anspruch 9, **dadurch gekennzeichnet, dass** das Bauteil über eine Sollbruchstelle, Presspassung, Verklispung oder dergleichen mit seiner Umgebung lösbar verbunden ist.

11. Überrollschutzeinrichtung nach Anspruch 10, **dadurch gekennzeichnet, dass** längs des Ausfahrweges des Überrollkörpers eine Führung für das mitgenommene Bauteil vorgesehen ist.

12. Überrollschutzeinrichtung nach einem der Ansprüche 9 bis 11, **dadurch gekennzeichnet, dass** der Dorn in einem Schlitten oder einer Führung relativ zum Bauteil beweglich gelagert ist.

13. Überrollschutzeinrichtung nach einem der Ansprüche 9 bis 12, **dadurch gekennzeichnet, dass** der Dorn in seiner Ausgangsstellung nicht über den oberen Rand des Bauteils vorsteht.

14. Überrollschutzeinrichtung nach Anspruch 13, **dadurch gekennzeichnet, dass** die Spitze des Dorns vom ausfahrenden Überrollkörper über den oberen Rand des Bauteils austreibbar ist.

15. Überrollschutzeinrichtung nach Anspruch 13, **dadurch gekennzeichnet, dass** die Spitze des Dorns durch Trägheitskräfte über den oberen Rand des Bauteils austreibbar ist, wenn die Bewegung des Bauteils beim Anstoßen an die Scheibe, durch das Lösen aus seiner Umgebung oder durch einen Widerstand in seiner Führung verzögert wird.
